# EUROPEAN PATENT APPLICATION

(11) **EP 1 927 577 A1**
(43) Date of publication of application: **04.06.2008**
(21) Application number: 06024907.5
(22) Date of filing: 01.12.2006
(51) Int. Cl.: C01B 3/38

(54) **Process for producing synthesis gas and related apparatus**

(71) Applicant: Casale Chemicals S.A., 6900 Lugano-Besso (CH)
(72) Inventor: Filippi, Ermanno, 6976 Castagnola (CH); Bedetti, Gianfranco, 20149 Milano (IT); Zanichelli, Luca, 22010 Grandola ed Unitl (IT)
(74) Representative: Zardi, Marco

(57) **Abstract**

The present invention refers to a process and a plant for producing synthesis gas, by means of the treatment of catalytic autothermal reforming of a feed gaseous flow comprising hydrocarbons, with the obtainment of partially transformed gas and synthesis gas, characterised in that said feed gaseous flow comprising hydrocarbons is mixed with a portion of said synthesis gas before it is subjected to said catalytic autothermal reforming, so as to attain a dilution of the concentration of the hydrocarbons present therein.

## Description

### Field of application

The present invention refers, in its more general aspect, to a process for producing synthesis gas comprising hydrogen and carbon monoxide, essentially based on a treatment of catalytic autothermal reforming of a feed gaseous flow comprising hydrocarbons, preferably a natural gas, such as methane, with the obtainment of a synthesis gas.

The invention also refers to an apparatus for producing a synthesis gas which actuates the abovementioned process.

### Prior Art

As it is known, for the production of a synthesis gas comprising in particular hydrogen and carbon monoxide, starting from gaseous hydrocarbons, natural gas such as methane and similar starting materials, i.e. starting from a feed gaseous flow comprising hydrocarbons, a so-called catalytic autothermal reforming treatment is widely used in which the hydrocarbons present in said feed gaseous flow are partially oxidised, with the consequent obtainment of the desired synthesis gas.

As known, the catalytic autothermal reforming comprises a step of forced oxidation, or rather a step of partial combustion with oxygen of the feed gaseous flow comprising hydrocarbons, with the obtainment of a gas having a substantially-reduced hydrocarbon (methane) content with respect to the feed gaseous flow, and a step in which the gas thus obtained is subjected to the completion of the reforming of the hydrocarbons still present therein by means of passage through an appropriate catalyser, until the equilibrium of the reforming and shift reactions is reached or nearly reached.

The aforesaid gas, obtained by the same partial combustion with oxygen of the feed gaseous flow comprising hydrogen, carbon monoxide, carbon dioxide, steam and hydrocarbons, is called "partially transformed gas", and this definition will be used below in the description and in the subsequent claims.

Although advantageous from different standpoints, the aforesaid prior art process has recognised drawbacks among which the main one consists in that the feed gaseous flow comprising hydrocarbons, especially if it contains a high hydrocarbon concentration, when subjected to partial combustion with oxygen in the autothermal reformer exhibits the real risk of generating significant quantities of soot, due to the high temperatures which are reached in the zones lacking oxygen, inevitably present in the mixing processes.

It is well-known that, associated with the soot production, is a high possibility of rapidly poisoning the catalyser used for the autothermal reforming, as well as the dirtying of the apparatuses downstream of the reformer, in particular of the boilers, with consequent high maintenance costs. The soot moreover negatively impacts both the overall yield of the process, due to the smaller quantity of hydrogen and carbon monoxide produced with the same combusted hydrocarbon, and the overall conduction of the same autothermal reformer.

### Summary of the invention

This technical problem underlying the present invention is that of devising and making available a process for producing synthesis gas of the type considered which is capable of permitting high production capacities with high yields and capable of eliminating the production of soot in the autothermal reformer even in the presence of high hydrocarbon concentrations, so as to overcome, in a simple and effective manner, the limitations and/or drawbacks mentioned with reference to the prior art.

This problem is solved according to the present invention by a process for producing synthesis gas by means of the treatment of catalytic autothermal reforming of a feed gaseous flow comprising hydrocarbons, with the obtainment of partially transformed gas and synthesis gas, characterised in that said feed gaseous flow comprising hydrocarbons is mixed with a portion of said synthesis gas before it is subjected to said catalytic autothermal reforming, so as to attain a dilution of the concentration of the hydrocarbons present therein.

Advantageously, the quantity of synthesis gas mixed to said feed gaseous flow comprising hydrocarbons is such that the hydrocarbon concentration in the gaseous mixture to be subjected to autothermal reforming is approximately comprised between 10% and 50%.

In fact, zero soot formation has been ascertained at these hydrocarbon concentration values in the gaseous mixture to be subjected to forced oxidation in the autothermal reformer.

Furthermore, the hydrogen contained in the synthesis gas used for diluting the feed gaseous flow advantageously impedes - at a chemical level - the soot formation.

According to an aspect of the process according to the invention, said portion of said synthesis gas is cooled before it is mixed with said feed gaseous flow comprising hydrocarbons. Preferably, said cooling is carried out in one or more heat exchangers in a indirect way with heat removal by means of a thermal exchange fluid (usually water) so as to bring said portion of said synthesis gas to a temperature comprised in the range of 50-250°C.

In this way, it is avoided the risk of cracking phenomenon of the hydrocarbons (in particular methane) existing in the gaseous mixture comprising the portion of recycled synthesis gas and said feed gaseous flow comprising hydrocarbons, otherwise favoured by the high temperature owned by the synthesis gas exiting the autothermal reformer.

Advantageously, the heat removed by the thermal exchange fluid in said heat exchanger allows the production of steam at pressures appropriate for its use within the plant for synthesis gas production or for other uses, thereby obtaining a limitation/reduction of the energy costs.

According to another aspect of the present invention, the portion of cooled synthesis gas to be mixed with said feed gaseous flow comprising hydrocarbons is compressed before being mixed with feed gaseous flow comprising hydrocarbons.

The present invention further refers to a plant for synthesis gas production according to the process illustrated above. Such a plant comprises:
- a autothermal reformer,
- a conduit for a feed gaseous flow comprising hydrocarbons in the direction of said autothermal reformer,
- a conduit for feeding a flow comprising oxygen to said autothermal reformer,
- a conduit for the exit of synthesis gas from said autothermal reformer,
the plant being characterized in that it comprises:
- means in fluid communication with said conduit for the exit of synthesis gas and with said conduit for the feed gaseous flow comprising hydrocarbons so as to mix a portion of said synthesis gas with said gaseous flow comprising hydrocarbons, obtaining a gaseous mixture comprising hydrocarbons, and
- a conduit for feeding said gaseous mixture comprising hydrocarbons to said autothermal reformer.

Further characteristics and advantages of the process for producing synthesis gas according to the invention will be clearer from the following description of a preferred embodiment thereof, given as indicative and non-limiting with reference to the attached drawing.

### Brief description of the drawings

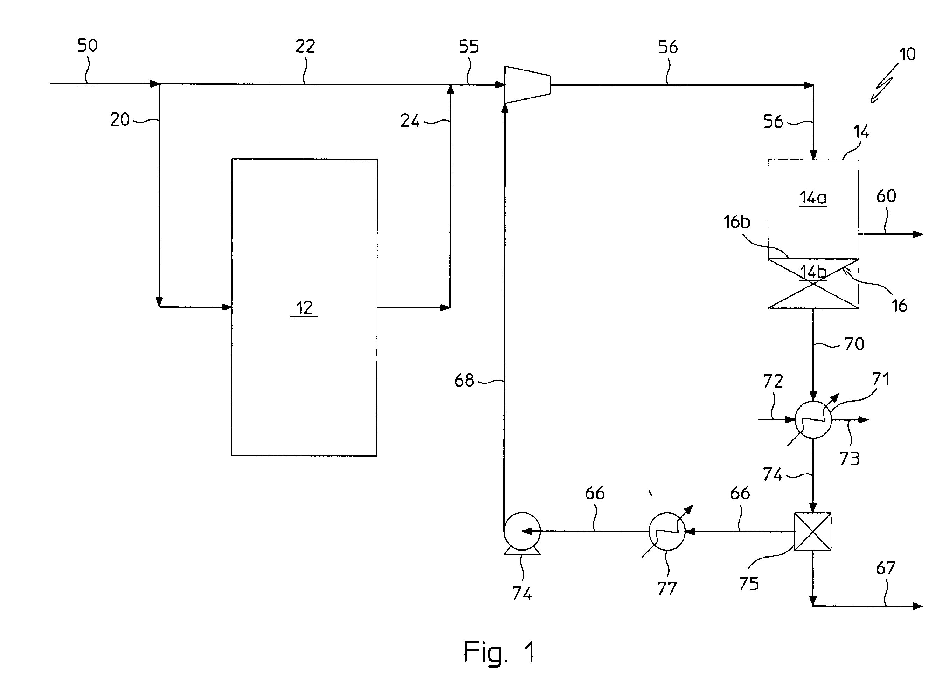

- Figure 1 represents a block diagram of a plant implementing a process for producing synthesis gas according to the present invention.

### Detailed description of a preferred embodiment

With reference to figure 1, a plant for producing synthesis gas according to the present invention is indicated, as a whole, with reference number 10

In the plant 10, the process for producing synthesis gas according to the present invention is based on the treatment of catalytic autothermal reforming of a feed gaseous flow comprising hydrocarbons, for example a natural gas such as methane and the like.

In the non-limiting example illustrated in the block diagram of figure 1, the catalytic autothermal reforming treatment is preceded by a so-called primary and/or pre-reforming steam reforming treatment. More precisely, in the case of primary steam reforming treatment, a part 20 of a gaseous flow 50 comprising hydrocarbons is directed, through a related duct 20, to a primary steam reformer 12, for being subjected to said steam reforming in a per se conventional manner. The remaining part of said gaseous flow 50 comprising hydrocarbons (non-treated part) is sent downstream of said primary reformer 12, through a related by-pass duct 22.

From the primary steam reforming, a gaseous flow is obtained comprising carbon monoxide, hydrogen, carbon dioxide, steam and unreacted hydrocarbons (for example CH4); downstream of said primary reformer 12, after having passed through a related duct 24, said gaseous flow is recombined with said untreated part of the gaseous flow 50 comprising hydrocarbons, to form, in a appropriate conduit 55, the feed gaseous flow comprising hydrocarbons.

The feed gaseous flow comprising hydrocarbons in the conduit 55 is fed, in a way that will be described below, to a catalytic autothermal reformer 14 so as it is subjected to a catalytic autothermal reforming treatment, said treatment essentially comprising:
- a partial combustion step with oxygen in a first zone 14a of said autothermal reformer 14, substantially extended from the inlet therein of the feed gaseous flow comprising hydrocarbons up to the upper surface (free surface) of a catalytic bed 16, in said zone 14a being also fed, through an appropriate conduit 60, the necessary quantity of oxygen (for example through a plurality of appropriate nozzles), and
- a step of catalytic reforming through said appropriate catalytic bed 16, with which said reformer 14 is equipped in a second zone thereof 14b, in direct fluid communication with said zone 14a.

From the partial combustion step with oxygen, it is obtained a gas having a reduced hydrocarbons (for example methane) residual content, i.e. a partially transformed gas, from which, after the completion of the reforming through said catalytic bed 16, the desired synthesis gas is obtained which is at the chemical equilibrium.

In accordance with the present invention, said gaseous flow comprising hydrocarbons, to be fed to said autothermal reformer 14, is mixed with a portion of said synthesis gas, before it is subjected to said catalytic autotheraml reforming, in particular before it is subjected to said partial combustion step with oxygen 60 of said autothermal reforming, so as to attain a dilution, with hydrogen, carbon monoxide and carbon dioxide, of the concentration of the hydrocarbons therein present.

In particular, such a mixing is advantageously carried out upstream the autothermal reformer 14, i.e. before the inlet of the feed gas flow comprising hydrocarbons in the zone 14a of said reformer 14.

In addition, the quantity of synthesis gas mixed with said feed gaseous flow comprising hydrocarbons is preferably such that in the gaseous mixture to be subjected to the partial combustion step with oxygen of said autothermal reforming, the hydrocarbon concentration is less than a predetermined value, for example it is comprised in the range of 10% on dry basis to 50% on dry basis. Preferably, the concentration of hydrocarbons is approximately in the range of 10-30% on dry basis.

To this purpose and according to an aspect of the present invention, the synthesis gas exiting the autothermal reformer 14, usually having a very high temperature (for example around 1000°C) is sent, through an appropriate conduit 70, to a heat exchanger 71, where said "hot" synthesis gas is cooled to an appropriate temperature (from 300°C to 400°C).

The heat removed from the synthesis gas is advantageously removed by a thermal exchange fluid (for example water) entering in the exchanger 71 through a respective conduit 72, thereby producing, at the exit of the exchanger 71, steam having a high thermal level and pressure sufficient for its use within or outside the plant 10, at full advantage of a limitation/reduction of the energy costs.

Such a steam is sent through a respective conduit 73 to the desired destination of use.

The cooled synthesis gas exiting the heat exchanger 71 through a respective conduit 74 is then divided in two portions, namely said portion to be mixed with said flow 55 comprising hydrocarbons and a remaining portion of synthesis gas which is sent, through an appropriate conduit 67, to other plants for constituting the feed raw material for the production of suitable chemicals such as ammonia and methanol.

Preferably, said portion of synthesis gas to be mixed with said flow 55 comprising hydrocarbons is equal or more than the remaining portion exiting the plant 10.

Advantageously, a control valve 75 for the respective flows of said portions of synthesis gas is provided in the plant 10.

The synthesis gas portion intended to be mixed with said flow 55 comprising hydrocarbons, exiting the control valve 75 through the conduit 66, is first further cooled in one or more suitable heat exchangers (a single exchanger 77 in the example of figure 1) in a indirect way with heat removal by a thermal exchange fluid (usually water) so as to bring such portion of synthesis gas to a temperature comprised in the range of 50-250°C.

Such a synthesis gas portion is then sent, still through an appropriate conduit 66, to an appropriate compressor 74, where it is compressed to a pressure higher than that of the gaseous flow 55 comprising hydrocarbons, and then it is sent, through an appropriate conduit 68, to the mixing with said gaseous flow 55 comprising hydrocarbons.

According to another aspect of the present invention, the mixing of said synthesis gas portion 68 with said gaseous flow 55 comprising hydrocarbons is preferably carried out in a appropriate mixer, such as an ejector 76 in which said synthesis gas portion 68 constitutes the driving fluid, so obtaining a gaseous mixture - constituted by said gaseous flow 55 comprising hydrocarbons and said synthesis gas portion 68 - which is sent, through a conduit 56, to the reformer 14 for the autothermal reforming treatment of the hydrocarbons present therein.

Thanks to the mixing with the synthesis gas portion 68, a dilution of the hydrocarbons in the feed flow gas 55 is advantageously obtained, so that when the resulting gaseous mixture 56 (having a hydrocarbon concentration in the order of 10-50%) is subjected to a partial combustion with oxygen within the zone 14a of the reforming 14, no soot production occurs.

The parameters for controlling the mixing and consequently for lowering the hydrocarbon concentration below predetermined values are, for example, the quantity of the portion 68 of recycled synthesis gas, the feeding rate of the feed gaseous flow 55 comprising hydrocarbons to be subjected to autothermal reforming, the feeding rate of the resulting gaseous mixture comprising hydrocarbons to the autothermal reformer 14 and the rate of the oxygen jets 60 in the zone 14a of the autothermal reformer 14.

Form the preceding description, it clearly derives that the process and the related plant for the production of synthesis gas according to the invention solve the technical problem illustrated above and achieve numerous advantages, the first of which lies in that the soot production is eliminated in the autothermal reformer even at high hydrocarbons concentrations in the feed gaseous flow 55.

Of course, a man skilled in the art, for the purpose of satisfying specific and contingent needs, can make numerous modifications and variants to the process for producing synthesis gas and apparatus described above, all moreover comprised in the protective scope of the present invention as defined by the following claims.

## Claims

1. Process for producing synthesis gas by means of the treatment of catalytic autothermal reforming of a feed gaseous flow comprising hydrocarbons, with the obtainment of partially transformed gas and synthesis gas, **characterised in that** said feed gaseous flow comprising hydrocarbons is mixed with a portion of said synthesis gas before it is subjected to said catalytic autothermal reforming, so as to attain a dilution of the concentration of the hydrocarbons present therein.

2. Process for producing synthesis gas by means of catalytic autothermal reforming of a feed gaseous flow comprising hydrocarbons in a respective autothermal reformer (14), with the obtainment of partially transformed gas and synthesis gas , said catalytic autothermal reforming treatment comprising a step of partial combustion with oxygen followed by a catalytic reforming step, **characterised in that** said feed gaseous flow comprising hydrocarbons is mixed with a portion of said synthesis gas before it is subjected to a partial combustion with oxygen in said autothermal reformer (14), so as to attain a dilution of the concentration of the hydrocarbons present therein.

3. Process according to claim 2, **characterised in that** said feed gaseous flow comprising hydrocarbons is mixed with said synthesis gas portion outside said autothermal reformer (14).

4. Process according to claim 2 or 3, **characterised in that** the quantity of synthesis gas mixed with said feed gaseous flow comprising hydrocarbons is such that in the gaseous mixture to be subjected to the partial combustion step with oxygen of said autothermal reforming, the hydrocarbon concentration is less than a predetermined value.

5. Process according to claim 4, **characterised in that** said predetermined value is in the range of 10-50%.

6. Process according to any one of the preceding claims **characterized in that** said synthesis gas portion is cooled before it is mixed with said gaseous flow comprising hydrocarbons.

7. Process according to claim 6, **characterised in that** said cooled synthesis gas portion to be mixed with said gaseous flow comprising hydrocarbons is compressed before the mixing with said gaseous flow comprising hydrocarbons is carried out.

8. Process according to claim 7, **characterised in that** said mixing of the gaseous flow comprising hydrocarbons with said synthesis gas portion is carried out in a mixer, preferably an ejector (76), in which said synthesis gas portion constitutes the driving fluid.

9. Process according to any one of the preceding claims, **characterised in that** said catalytic autothermal reforming treatment is preceded by the following operative steps:
- subjecting a portion of said gaseous flow (50) comprising hydrocarbons to steam reforming, with the obtainment of a gaseous flow comprising carbon monoxide, hydrogen, carbon dioxide, steam and unreacted hydrocarbons,
- recombining said gaseous flow comprising carbon monoxide, hydrogen, carbon dioxide, steam and unreacted hydrocarbons with the untreated portion of said gaseous flow (50) comprising hydrocarbons to form said feed gaseous flow comprising hydrocarbons which is subjected to said catalytic autothermal reforming treatment.

10. Plant (10) for synthesis gas production comprising:
- a autothermal reformer (14),
- a conduit (55) for a feed gaseous flow comprising hydrocarbons in the direction of said autothermal reformer (14),
- a conduit (60) for feeding a flow comprising oxygen to said autothermal reformer,
- a conduit (70) for the exit of synthesis gas from said autothermal reformer (14),
the plant being **characterized in that** it comprises:
- means (66,68,74,76,77) in fluid communication with said conduit (70) for the exit of synthesis gas and with said conduit (55) for said feed gaseous flow comprising hydrocarbons so as to mix a portion of said synthesis gas with said gaseous flow comprising hydrocarbons, obtaining a gaseous mixture, and
- a conduit (56) for feeding said gaseous mixture comprising hydrocarbons to said autothermal reformer.

11. Plant (10) according to claim 10, **characterized in that** said means (66,68,74,76,77 for mixing a portion of said synthesis gas with said gaseous flow comprising hydrocarbons comprises:
- at least one heat exchanger (77),
- a compressor (74)
- an ejector (76) in fluid communication with said conduit (55) of the gaseous flow comprising hydrocarbons and with said conduit (56) for feeding said gaseous mixture to said autothermal reformer (14),
- a conduit (66) in fluid communication with said conduit (70) for the exit of synthesis gas and with said compressor (74), through said at least one heat exchanger (77), for feeding a portion of said synthesis gas to said compressor (74), obtaining synthesis gas cooled and compressed, and
- a conduit (68) in fluid communication with said compressor (74) and said ejector (76) for feeding said compressed synthesis gas to said ejector, obtaining a gaseous mixture.

12. Plant (10) according to claim 11, **characterized in that** it further comprises a heat exchanger (71) located in fluid communication between said conduit (70) for the exit of synthesis gas and said conduit (66) for feeding the synthesis gas portion to said at least one heat exchanger (77).

13. Plant according to anyone of the claims 10 to 12, **characterized in that** said autothermal reformer (14) comprises a first zone (14a) for the partial combustion with oxygen of said gaseous mixture comprising hydrocarbons, with the obtainment of partially transformed gas, followed by a second zone (14b) comprising a catalytic bed (16) for the catalytic autothermal reforming of said partially transformed gas, with the obtainment of synthesis gas, and **in that** said conduit (60) for feeding oxygen and said conduit (56) for feeding said gaseous mixture comprising hydrocarbons are both in fluid communication with said first zone (14a) of said autothermal reformer (14).

14. Plant (10) according to any one of the claims from 10 to 12, further comprising:
- a steam reformer (12),
- a conduit (20) for feeding a gas flow (50) comprising hydrocarbons to said steam reformer (12),
- a by-pass conduit (22) for sending the remaining untreated part of said gaseous flow (50) comprising hydrocarbons downstream to said steam reformer (12),
- a connecting conduit (24) between said steam reformer (12) and said by-pass conduit (22) for combining a gaseous flow comprising carbon monoxide, hydrogen, carbon dioxide, steam and unreacted hydrocarbons exiting from said steam reformer (12) with said untreated part of the gaseous flow (50) comprising hydrocarbons, so as to form said gaseous flow comprising hydrocarbons to be sent to the autothermal reformer (14).
